# EUROPEAN PATENT APPLICATION

(11) **EP 4 796 976 A1**
(43) Date of publication of application: **26.08.2026**
(21) Application number: 24886303.7
(22) Date of filing: 31.10.2024
(51) Int. Cl.: G02B 27/01, G02B 13/00, G02B 27/09, G02B 27/28, G02B 5/30, G02B 27/10, G02B 3/00

(54) **WEARABLE ELECTRONIC DEVICE INCLUDING POLARIZING STRUCTURE**

(30) Priority: 02.11.2023 KR 20230150137; 11.12.2023 KR 20230179070
(71) Applicant: Samsung Electronics Co., Ltd., Suwon-si, Gyeonggi-do 16677 (KR)
(72) Inventor: GO, Hyoungjun, Suwon-si, Gyeonggi-do 16677 (KR); MOON, Youngmin, Suwon-si, Gyeonggi-do 16677 (KR); SEO, Dongil, Suwon-si, Gyeonggi-do 16677 (KR); LEE, Changsu, Suwon-si, Gyeonggi-do 16677 (KR); CHOI, Sooyoung, Suwon-si, Gyeonggi-do 16677 (KR); JEONG, Hojin, Suwon-si, Gyeonggi-do 16677 (KR); CHOI, Hyunsang, Suwon-si, Gyeonggi-do 16677 (KR); CHOI, Hyunsuk, Suwon-si, Gyeonggi-do 16677 (KR)
(74) Representative: Gulde & Partner
(86) International application number: PCT/KR2024/016933
(87) International publication number: WO 2025/095631

(57) **Abstract**

According to various embodiments disclosed herein, a wearable electronic device includes: three or more lenses; and a polarizing unit comprising a polarizer, a reflective polarizer, a quarter wave plate, and a beam splitter that are sequentially disposed along a first direction, wherein the polarizer, the reflective polarizer, and the quarter wave plate are disposed spaced apart from the beam splitter with at least one lens among the three or more lenses interposed therebetween, and the polarizing unit includes a layer that is harder than the polarizer and the reflective polarizer.

## Description

### [Technical Field]

Embodiment(s) of the disclosure relate to an electronic device, e.g., a wearable electronic device including a polarization structure.

### [Background Art]

An electronic device for portable purposes, such as an electronic organizer, a portable multimedia player, a mobile communication terminal, or a tablet PC, generally includes a display member (e.g., a display module) and a battery, and has a bar-type, folder-type, or sliding-type exterior due to the shape of the display member or the battery. Recently, as the performance of display members and batteries has enhanced and they have been downsized, an electronic device that may be worn on a part of the body, such as a wrist or head, or in the form of clothing (hereinafter, "wearable electronic device") has emerged.

Examples of wearable electronic devices include head-mounted wearable devices (HMD), smart glasses, smart watches (or bands), contact lens-type devices, ring-type devices, clothing/shoes/glove-type devices, and the like. Such body-worn electronic devices are easy to carry and may enhance user accessibility.

As one example, the head-mounted wearable device is a device used while worn on a user's head or face, which projects images onto the user's retina to allow viewing of a virtual image in a three-dimensional space. For example, head-mounted wearable devices may be divided into a see-through type that provides augmented reality (AR) and a see-closed type that provides virtual reality (VR). The see-through type head-mounted wearable device may be implemented in the form of glasses and may provide the user with, e.g., information, such as buildings and objects in the space within the user's field of view, in the form of images or text. The see-closed type head-mounted wearable device may output independent images to the user's eyes, respectively, and provide the user with content (games, movies, streaming, broadcasting, etc.), which is provided from a mobile communication terminal or an external input, in the form of video or sound to thereby provide an excellent sense of immersion. Further, the head-mounted wearable device may be used to provide mixed reality (MR) or extended reality (XR), which is a combination of augmented reality (AR) and virtual reality (VR).

Recently, development of products related to head-mounted wearable devices is actively progressing. Head-mounted wearable devices are used for various purposes, such as military, gaming, industrial, and medical use. Accordingly, it is required to provide good image quality while in a lighter and smaller size.

The above-described information may be provided as related art for the purpose of helping understanding of the disclosure. No assertion or determination is made as to whether any of the above-described content may be applied as prior art in relation to the disclosure.

### [Detailed Description of the Invention]

### [Technical Solution]

According to an embodiment of the disclosure, a lens assembly may be provided that includes: at least three lenses; and a polarization part (PP) that is spaced apart from a beam splitter with at least one lens interposed therebetween and includes a polarizer, a reflective polarizer, a quarter-wave plate, and a layer that is harder than the polarizer and the reflective polarizer, which are sequentially disposed along a first direction.

According to an embodiment of the disclosure, a lens assembly may be provided that includes: at least three lenses; and a polarization part (PP) that is spaced apart from a beam splitter with at least one lens interposed therebetween and includes a polarizer, a reflective polarizer, a quarter-wave plate, and a layer having a higher modulus than the polarizer and the reflective polarizer, which are sequentially disposed along a first direction.

According to an embodiment of the disclosure, a wearable electronic device may be provided that includes: at least three lenses disposed between a user's eye (E) side and a display (D) side and aligned along an optical axis; and a polarization part (PP) that is spaced apart from a beam splitter with at least one lens interposed therebetween and includes a polarizer, a reflective polarizer, and a quarter-wave plate sequentially disposed from the user's eye side toward the display side and a rigid layer disposed between the polarizer and the reflective polarizer.

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment according to an embodiment of the disclosure.
FIG. 2 is a view illustrating a wearable electronic device according to an embodiment of the disclosure.
FIG. 3 is a view illustrating a front surface of a wearable electronic device according to an embodiment of the disclosure.
FIG. 4 is a view illustrating a rear surface of a wearable electronic device according to an embodiment of the disclosure.
FIG. 5 illustrates a path through which light output by a display is focused or guided to a user's eye in a wearable electronic device according to an embodiment of the disclosure.
FIG. 6 illustrates a path through which light output by a display is focused or guided to a user's eye in a wearable electronic device according to an embodiment of the disclosure.
FIG. 7 illustrates a path through which light output by a display is focused or guided to a user's eye in a wearable electronic device according to an embodiment of the disclosure.
FIG. 8 illustrates a path through which light output by a display is focused or guided to a user's eye in a wearable electronic device according to a first embodiment of the disclosure.
FIG. 9 illustrates a path through which light output by a display is focused or guided to a user's eye in a wearable electronic device according to a second embodiment of the disclosure.
FIG. 10 illustrates a path through which light output by a display is focused or guided to a user's eye in a wearable electronic device according to a third embodiment of the disclosure.
FIG. 11 is a view illustrating a laminated structure between the polarization part and lenses of a wearable electronic device according to an embodiment of the disclosure.
FIG. 12 is a view illustrating lamination of a polarization part according to various embodiments.
FIG. 13 is a view illustrating a surface roughness and resolving power of a laminated polarization part according to various embodiments.
FIG. 14 is a view illustrating positions where resolving power is measured in two different directions with respect to a ray axis.
FIG. 15 is a view illustrating assembling of a lens and a laminated polarization part into a lens barrel.
FIG. 16 is a view illustrating a process of laminating a polarization part on a lens.
FIG. 17 is a block diagram illustrating a process of laminating a polarization part on a lens.
FIG. 18 is a view illustrating a laminated structure of a lens and a polarization part, MTF peak graphs, and a surface roughness according to various embodiments.
FIG. 19 is a view conceptually comparing a first embodiment, a second embodiment, and a third embodiment of the disclosure.

Throughout the accompanying drawings, similar reference numerals may be assigned to similar parts, configurations, and/or structures.

### [Mode for Carrying out the Invention]

A wearable electronic device implementing augmented reality, virtual reality, mixed reality, and/or extended reality may be generally used while worn on a user's head or face. For example, a display that outputs visual information may be disposed at a considerably close distance to the user's eye. When the display and the user's eye are disposed at a considerably close distance, there may be difficulty in configuring an optical system that guides or focuses visual information to the user's eye. For example, the size or number of lenses may be limited for miniaturization or weight reduction of the wearable electronic device, and it may be difficult to implement an optical system capable of providing good image quality with a limited number of lenses. According to an embodiment, in a usage environment where the display and the user's eye are disposed at a considerably close distance, an optical system having a pancake lens structure may be useful for providing good image quality while using a limited number of lenses.

The optical system having the pancake lens structure may implement an optical path having a sufficient length relative to the lens total length by reflecting visual information at least twice on a path through which visual information output by the display reaches the user's eye. Here, the "lens total length" may refer to a distance from a subject-side surface (user's eye side surface) of a lens closest to a subject (e.g., a user's eye) to a display-side surface of a lens closest to the display (a lens farthest from the subject). A wearable electronic device including the pancake lens structure may have the shortest lens total length, assuming that the required focal length between the display and the lens is the same, compared to a wearable electronic device manufactured by including a general lens or a Fresnel lens. For example, the wearable electronic device including the pancake lens structure has an advantage of being able to reduce the lens total length by about 70% compared to a wearable electronic device including a general concave or convex lens structure. Further, the pancake lens structure may provide good image quality while being downsized.

To this end, the pancake lens structure may include a polarization part (PP). The polarization part may typically be implemented in the form of a polarizing film. For example, the polarization part may be implemented in the form in which a plurality of sub polarizing films are laminated. However, when a plurality of sub polarizing films are laminated, each sub polarizing film has an inherent optical axis characteristic, and accordingly, a phenomenon of resolving power degradation due to surface wrinkles and/or roughness defects may occur.

According to the disclosure, surface wrinkles occurring due to the polarizing film may be alleviated, removed, and/or prevented to reduce image distortion and enhance resolving power.

An embodiment of the disclosure may at least address the above-described problems and/or disadvantages and provide at least the advantages described below, and may provide a wearable electronic device including a polarization part that implements good image quality by alleviating, removing, and/or preventing wrinkles occurring due to the polarizing film.

An embodiment of the disclosure may alleviate, remove, and/or prevent surface wrinkles occurring due to the polarizing film to reduce distortion of a screen displayed on the wearable electronic device and enhance resolving power.

An embodiment of the disclosure may provide a wearable electronic device including a downsized and/or lightweight lens assembly while providing good image quality.

Objects of the disclosure are not limited to the foregoing, and other unmentioned objects would be apparent to one of ordinary skill in the art from the following description.

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

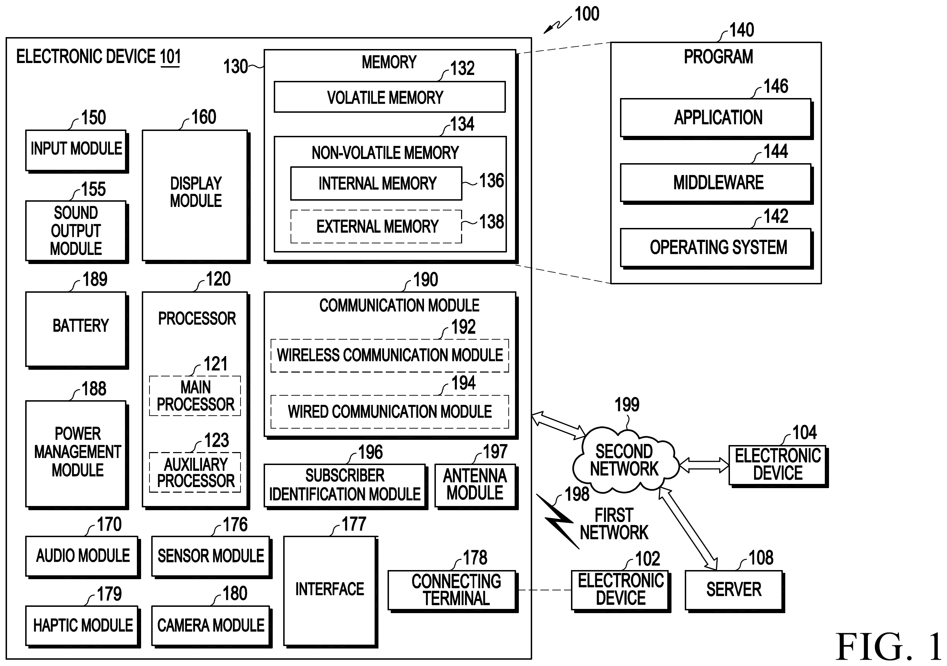

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. According to an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{TM}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multiple components (e.g., multiple chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

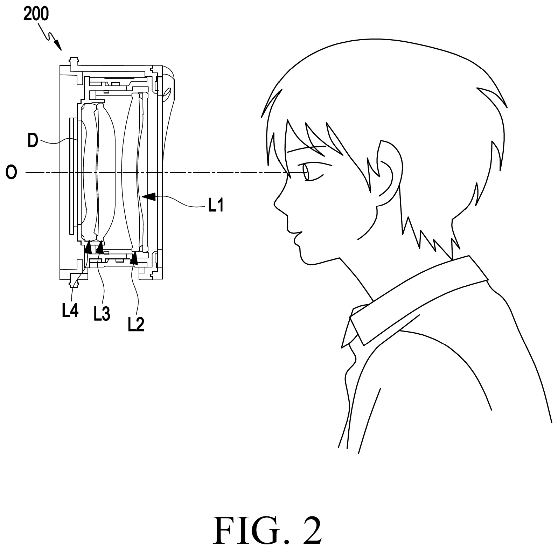

FIG. 2 is a view illustrating a wearable electronic device 200 according to an embodiment of the disclosure.

Although some numbers are presented in describing an embodiment of the disclosure, it should be noted that the numbers do not limit the embodiment of the disclosure as long as the numbers are not set forth in the claims.

Referring to FIG. 2, the wearable electronic device 200 (e.g., the electronic device 101 of FIG. 1) may be an electronic device that may be worn on the user's head or face, and the user may visually recognize the surrounding objects or environment even while wearing the wearable electronic device 200. The wearable electronic device 200 may obtain and/or recognize a visual image regarding the environment or an object in the direction in which the wearable electronic device 200 is oriented or the user views using the camera module and receive information about the object or environment from an external electronic device through a network. The wearable electronic device 200 may provide the received object- or environment-related information, in the form of an audio or visual form, to the user. For example, the wearable electronic device 200 may provide the received object- or environment-related information, in a visual form, to the user through a display member such as a display module. By implementing information about the object or environment in a visual form and combining them with a real image (or video) of the user's ambient environment, the wearable electronic device 200 may implement augmented reality (AR), virtual reality (VR), mixed Reality (MR), and/or extended reality (XR). The display member may output a screen in which the augmented reality object is added to the actual image (or video) of the environment around the user, thereby providing information regarding the surrounding thing or environment to the user.

According to an embodiment, all or some of operations to be executed at the electronic device 101 or wearable electronic device 200 may be executed at one or more of the external electronic devices 102, 104, or 108. For example, if the electronic device 101 or wearable electronic device 200 should perform a function or a service automatically, or in response to a request from a user or another device, the electronic device 101 or wearable electronic device 200, instead of, or in addition to, executing the function or the service, may request the one or more external electronic devices 102, 104, or 108 to perform at least part of the function or the service. The one or more external electronic devices receiving the request may perform the at least part of the function or the service requested, or an additional function or an additional service related to the request, and transfer an outcome of the performing to the electronic device 101 or wearable electronic device 200. The electronic device 101 or wearable electronic device 200 may provide the outcome, with or without further processing of the outcome, as at least part of a reply to the request. For example, the external electronic device 102 may render and transfer, to the electronic device 101 or wearable electronic device 200, content data executed on an application, and the electronic device 101 or wearable electronic device 200 receiving the data may output the content data to a display module. When the electronic device 101 or wearable electronic device 200 detects the user's movement through a sensor(s) such as an inertial measurement unit sensor, the processor (e.g., the processor 120 of FIG. 1) of the electronic device 101 or wearable electronic device 200 may correct the rendering data received from the external electronic device 102 based on the movement information and output the same on the display module. Alternatively, when detecting the user's movement through the sensor(s), the processor (e.g., the processor 120 of FIG. 1) of the electronic device 101 or wearable electronic device 200 may transfer the movement information to the external electronic device 102, rendering to update the screen data. According to various embodiments, the external electronic device 102 may be various types of devices, such as a case device capable of storing and charging the electronic device 101.

In the following detailed description, the "state or position in which the electronic device or a designated component of the electronic device faces the user's face" may be mentioned in various manners and it should be noted that this presumes that the user wears the wearable electronic device 200.

According to an embodiment, the wearable electronic device 200 may include at least one display member and a wearing member. Depending on the structure of the display member, the wearable electronic device 200 may further include a structure (e.g., lens frame) for mounting or supporting the display member. A pair of display members including a first display member and a second display member may be provided and be disposed to correspond to the user's right and left eyes, respectively, while the wearable electronic device 200 is worn on the user's body. According to an embodiment, the wearable electronic device 200 may have a housing shape (e.g., goggles shape) including one display member corresponding to the right eye and the left eye.

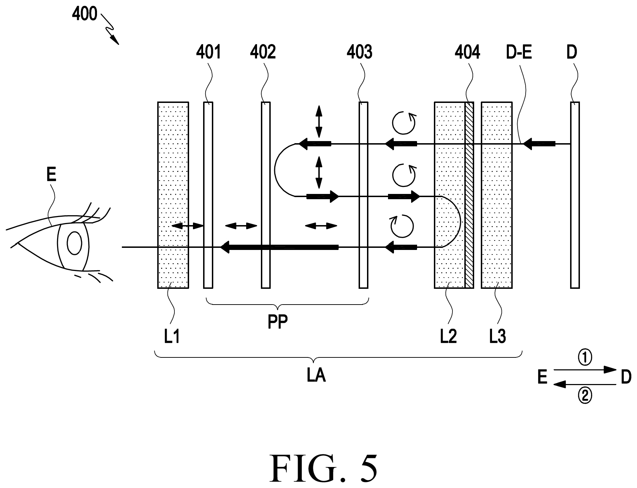

According to an embodiment, the display member is a component provided to provide visual information to the user and may include, e.g., a display D, a plurality of lenses L1, L2, L3, and L4 (e.g., a lens assembly), and/or at least one sensor. Here, the lens assembly and the display D each may be formed to be transparent or semi-transparent. However, the display member is not limited thereto. According to an embodiment, the display member may include a window member that may be a semi-transparent glass or a member capable of adjusting its light transmittance depending on the concentration of coloring. According to an embodiment, the display member may include a reflective lens or a lens including a waveguide. An image output from the light output device (e.g., a projector or display D) may form on each lens, providing the user with visual information. For example, the display member may mean a display that may include a waveguide (e.g., a light waveguide) in at least a portion of each lens and transfer the image (or light) output from the light output device, such as the display D, through the waveguide included in the display member to the user's eye while simultaneously transferring the real world through the area to the user's eye in a see-through fashion. According to an embodiment, the waveguide may be understood as a portion of a lens assembly. A lens assembly (e.g., the lens assembly LA of FIGS. 5 to 9 below) is a configuration including a plurality of lenses (e.g., L1, L2, L3, L4), and may be disposed in a space within the wearable electronic device 200 in a state of being aligned with a ray axis O (e.g., the ray axis D-E of FIGS. 5 to 9). A configuration in which visual information output from the display D is provided to the user's eye through the lens assembly is examined again below with reference to FIG. 5.

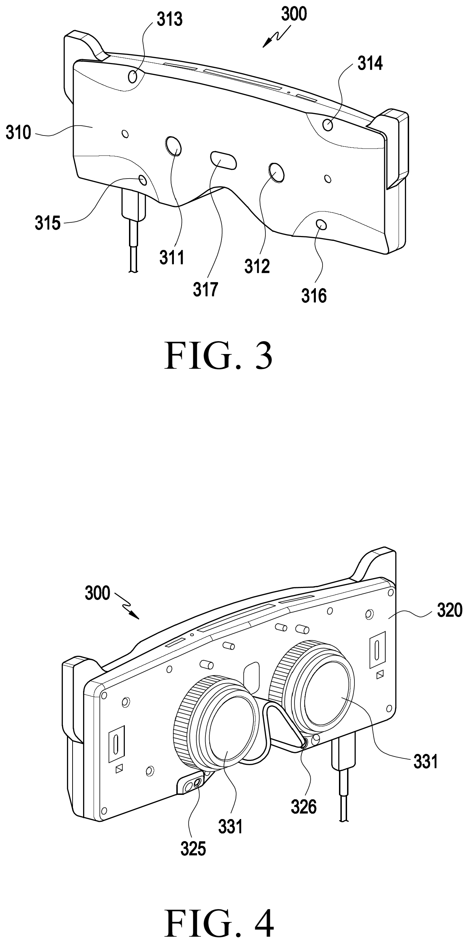

FIGS. 3 and 4 are views illustrating a front surface and a rear surface of a wearable electronic device 300 according to an embodiment.

Referring to FIGS. 3 and 4, according to an embodiment, camera modules 311, 312, 313, 314, 315, 316 and/or a depth sensor 317 for acquiring information related to a surrounding environment of the wearable electronic device 300 may be disposed on a first surface 310 of the electronic device 300 (e.g., a housing).

According to an embodiment, the camera modules 311, 312 may acquire an image related to a surrounding environment of the wearable electronic device.

According to an embodiment, the camera modules 313, 314, 315, 316 may acquire an image in a state in which the wearable electronic device is worn by a user. The camera modules 313, 314, 315, and 316 may be used for hand detection, tracking, and recognition of the user gesture (e.g., hand motion). The camera modules 313, 314, 315, 316 may be used for 3DoF (degree of freedom), 6DoF head tracking, position (space, environment) recognition, and/or movement recognition. According to an embodiment, the camera modules 311, 312 may also be used for hand detection and tracking or recognition or detection of a user's gesture.

According to an embodiment, the depth sensor 317 may be configured to transmit a signal and receive a signal reflected from a subject, and may be used for the purpose of identifying a distance to an object, such as time of flight (TOF). Alternatively or additionally to the depth sensor 317, the camera modules 313, 314, 315, and 316 may identify the distance to the object.

According to an embodiment, camera modules 325 and 326 for face recognition and/or a display 331 (and/or lens) may be disposed on the second surface 320 of the housing.

According to an embodiment, the face recognition camera module 325, 326 adjacent to the display may be used for recognizing a user's face, or may recognize and/or track both eyes of a user.

According to an embodiment, the display 331 (and/or a lens) may be disposed on the second surface 320 of the wearable electronic device 300. According to an embodiment, the display 331 (and/or a lens) may be at least partially similar to or substantially the same as the display D (and/or the lenses L1, L2, L3, L4) of FIG. 2. According to an embodiment, among the plurality of camera modules 313, 314, 315, 316, the wearable electronic device 300 may not include the camera modules 315, 316. Although not shown in FIGS. 3 and 4, the wearable electronic device 300 may further include at least one of the components shown in FIG. 1 and/or 2.

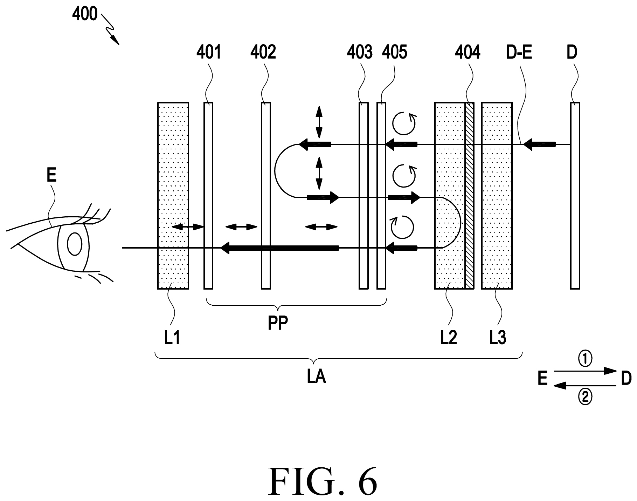

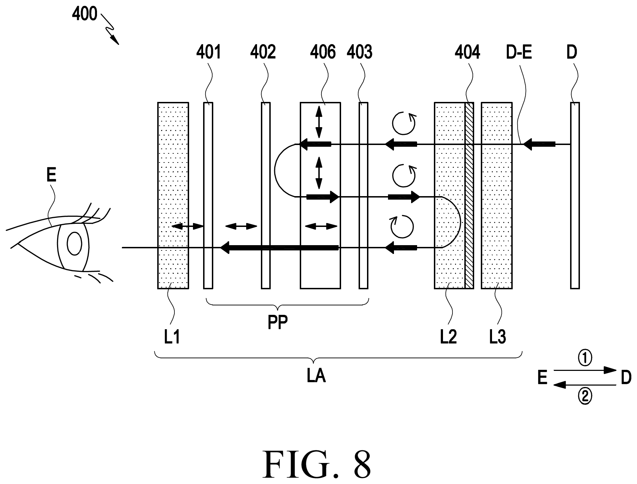

According to an embodiment, the display 331 may be understood to include a display module (e.g., the display module 160 of FIG. 1) that outputs a screen and a lens assembly (e.g., the lens assembly LA of FIGS. 6 and 8) that focuses the output screen onto the user's eye. In FIG. 4, it should be noted that in the structure of the display 331, the reference numeral is allocated to a portion visible on the exterior of the wearable electronic device 300 and indicates the lens closest to the user's eye.

As described above, the wearable electronic device 300 according to an embodiment may have a form factor for being worn on the user's head. The wearable electronic device 300 may further include a strap and/or a wearing member for being fixed on a part of the user's body. The wearable electronic device 300 may provide the user experience based on augmented reality, virtual reality, and/or mixed reality while worn on the user's head.

FIG. 5 illustrates a path through which light output by the display D is focused or guided to the user's eye E in the wearable electronic device 400 according to an embodiment of the disclosure.

Referring to FIG. 5 together with FIG. 2, the wearable electronic device 400 according to an embodiment of the disclosure may include a display D, a lens assembly (LA) (e.g., a plurality of lenses L1, L2, L3), and a polarization part (PP). The wearable electronic device 400 may be an optical device (e.g., AR/VR glasses) that provides visual information to a user while worn on the user's head or face by including the display D and the lens assembly LA. The polarization part PP may be a component laminated with the lens assembly LA. Depending on an embodiment, the lens assembly LA may be interpreted as at least three lenses only, and in this case, the polarization part PP may be interpreted as a component separate from the lens assembly LA. However, the disclosure is not necessarily limited thereto, and according to the disclosure, based on an aspect in which the polarization part PP is laminated with the lens assembly LA, the lens assembly LA may also be defined as including the polarization part PP.

According to an embodiment, the display D may include a screen display area that exposes visual information to portions corresponding to both eyes of a user when the user wears the wearable electronic device 400. According to an embodiment, the wearable electronic device 400 may include a pair of displays D corresponding to both eyes of a user. The display D may include, e.g., a liquid crystal display (LCD), a light emitting diode (LED) display, an organic light emitting diode (OLED) display, or a microelectromechanical systems (MEMS) display, or an electronic paper display. The display D may display, e.g., various contents (e.g., text, images, videos, icons, or symbols) provided as visual information to a user.

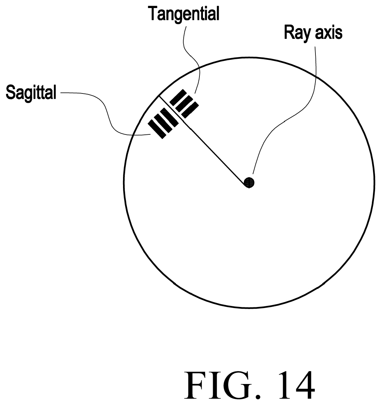

According to an embodiment, the lens assembly LA may be configured as a combination of a plurality of lenses. According to an embodiment, the plurality of lenses may be surrounded by a lens barrel (e.g., the lens barrel LB of FIG. 14 below). Although three lenses L1, L2, L3 are illustrated in FIG. 5 as the plurality of lenses, the disclosure is not necessarily limited thereto, and application of a greater number of lenses is also possible.

In the disclosure, the polarization part PP may include a polarizer (POL) 401, a quarter-wave plate (QWP) 403, and a reflective polarizer (RP) 402.

According to an embodiment, the polarizer 401 may be a component that absorbs light vibrating in a predetermined specific direction and transmits only a component polarized in a direction perpendicular to a light traveling path D-E (hereinafter, referred to as a "ray axis D-E") (hereinafter, an "optic-axis direction"). The polarizer 401 may be implemented by adsorbing iodine on a polyvinyl alcohol (PVA) film and then stretching the film, for example. In this case, the optic-axis direction may be defined according to an arrangement direction of the iodine molecular structure. For example, the polarizer 401 of the disclosure may have a thickness of about 20 µm. Natural light may be converted into linear polarization through such a polarizer 401.

The reflective polarizer 402 may be a component that transmits linear polarization among light passing therethrough, but reflects a portion of the linear polarization. For example, vertical polarization among linear polarization may be reflected and horizontal polarization may be transmitted. Alternatively, horizontal polarization among linear polarization may be reflected and vertical polarization may be transmitted. To this end, the reflective polarizer 402 may be formed by stretching an optical film composed of hundreds of reflective layers, which is a film capable of reflecting a portion of polarization and transmitting another portion of polarization. The thickness of the reflective polarizer 402 may be thicker than the thickness of the polarizer 401, and for example, the reflective polarizer 402 may have a thickness of about 35 µm to 60 µm.

According to an embodiment, e.g., a wave in a uniaxial crystal may be separated into two components, e.g., a component h parallel to the optic axis and a component v perpendicular to the optic axis, and the component h parallel to the optic axis and the component v perpendicular to the optic axis may accumulate phases at different speeds, respectively. The quarter-wave plate 403 may be a component that converts a polarization state of light separated into the component h parallel to the optic axis and the component v perpendicular to the optic axis. The quarter-wave plate 403 may also be referred to as a phase retarder. The quarter-wave plate 403 may have, e.g., as a birefringent material, different refractive indices in the directions of two different axes (a fast axis, a slow axis). Among light passing through the quarter-wave plate 403, light aligned with the fast axis passes through the quarter-wave plate 403 faster, and light aligned with the slow axis passes through the quarter-wave plate 403 relatively slower. Using this principle, when linearly polarized light passing through the quarter-wave plate 403 passes through at a +45 degree angle (or a -45 degree angle) with respect to the fast axis, it is changed to circularly polarized light, and conversely, when circularly polarized light passes through at a +45 degree angle (or a -45 degree angle) with respect to the fast axis, it may be changed to linearly polarized light.

According to an embodiment, at least one of the polarizer 401, the quarter-wave plate 403, and/or the reflective polarizer 402, or the entire polarization part PP, may be understood as a part of the lens assembly LA. As described above, the polarization part PP may be understood as a component included in the lens assembly LA. According to an embodiment, the lens assembly LA may further include a beam splitter 404 (or a light diffusing member). According to an embodiment, the beam splitter 404 may also be understood as a component included in the lens assembly LA. The wearable electronic device 400 according to an embodiment may provide a vision correction function to a user by adjusting a diopter by moving at least one of the plurality of lenses (e.g., L1, L2, L3).

According to an embodiment, the polarization part PP is disposed between the user's eye E and the display D, and may selectively transmit, reflect, and/or block light (e.g., light output from the display D) entering the user's eye. For example, the polarizer 401, the quarter-wave plate 403, and the reflective polarizer 402 may change a traveling path of light passing therethrough to substantially extend the traveling path of light to be longer than a mechanical or physical length of the lens assembly LA. Here, the polarizer 401, the quarter-wave plate 403, and the reflective polarizer 402 changing the traveling path of light may be understood as changing a polarization state of light. By implementing a focal length longer than the mechanical or physical length of the lens assembly LA using the polarization part PP, the quality of an image provided to a user may be enhanced. Because the size or weight of the wearable electronic device 400 is limited due to the actual usage environment (e.g., used in a worn state), the resolution of the output virtual image may be limited, and it may be difficult to provide an image of good quality to a user even through the optical system. According to an embodiment, by including an optical system having a pancake lens structure (e.g., the lens assembly LA including the polarization part PP), the wearable electronic device 400 may extend the optical path length of an incident light ray relative to the external size and/or enhance the image resolution provided to a user.

According to an embodiment, various contents (e.g., text, images, videos, icons, or symbols) output in the form of light from the display D may pass through the lens assembly LA including the polarization part PP and be provided to the user's eye.

According to an embodiment, the polarization part PP may be disposed at a position closer to the user's eye E than a first lens L1 from the user's eye E among the plurality of lenses (e.g., L1, L2, L3) included in the lens assembly LA, or may be disposed between at least two lenses. Referring to FIG. 5, the polarization part PP may be disposed between a first lens L1 from the user's eye E (hereinafter, referred to as a "first lens L1") and a second lens L2 from the user's eye E. However, the disclosure is not necessarily limited thereto, and the position of the polarization part PP may be variously set according to an embodiment. For example, the polarization part PP may also be disposed between a second lens L2 from the user's eye E (hereinafter, referred to as a "second lens L2") and a third lens L3 from the user's eye E (hereinafter, referred to as a "third lens L3"). Other various embodiments may be applied. If the lens assembly LA includes a greater number of lenses than those illustrated in FIG. 5, application of an embodiment different from the above-mentioned embodiment is also possible. Hereinafter, for convenience of description, a description is given focusing on an embodiment in which the polarization part PP is disposed between the first lens L1 and the second lens L2, as illustrated in FIG. 5. In the illustrated embodiment, the first lens L1 of the wearable electronic device 400 or the lens assembly LA may be understood as a lens disposed farthest from the display D among the plurality of lenses (e.g., at least three lenses), or a lens disposed closest to the user's eye E.

Referring to FIG. 5, the polarizer 401, the reflective polarizer 402, and the quarter-wave plate 403 included in the polarization part PP may be sequentially disposed between the user's eye E and the display D, along a direction in which the user's eye E views the display D. According to the embodiment illustrated in FIG. 5, the polarizer 401 is disposed on the display side of the first lens L1, the quarter-wave plate 403 is disposed on the eye side of the second lens L2, and the reflective polarizer 402 may be disposed between the polarizer 401 and the quarter-wave plate 403. Here, a component being "disposed on XX" may refer to being disposed adjacent to or substantially in contact with XX. For example, the polarizer 401 may be disposed adjacent to the display-side surface of the first lens L1 (or the second lens L2), or may be provided in a state of being substantially in contact with the display-side surface of the first lens L1 (or the second lens L2).

According to an embodiment, the polarizer 401 and/or the reflective polarizer 402 may be configured in a film form. When the polarizer 401 and/or the reflective polarizer 402 are configured in a film form, the polarizer 401 and/or the reflective polarizer 402 may be laminated with each other. The polarizer 401 and/or the reflective polarizer 402 may be additionally laminated together with the quarter-wave plate 403 to form the polarization part PP and may be attached to the first lens L1 from the user's eye. Here, "lamination" may refer to two different members being bonded together by an adhesive provided on at least one of them.

According to an embodiment, when the polarization part PP is disposed in contact with a lens (e.g., the first lens L1), e.g., when attached to one surface of the first lens L1, a surface of the first lens L1 that contacts the polarization part PP may be substantially implemented as a flat surface.

The wearable electronic device 400 may include the beam splitter 404. The beam splitter 404 may be disposed on the display D side from the quarter-wave plate 403. The beam splitter 404 may be disposed to be spaced apart from the quarter-wave plate 403 by a predetermined distance. At least one lens may be disposed between the quarter-wave plate 403 and the beam splitter 404. Referring to FIG. 5, the beam splitter 404 may be disposed on the display-side surface of the second lens L2.

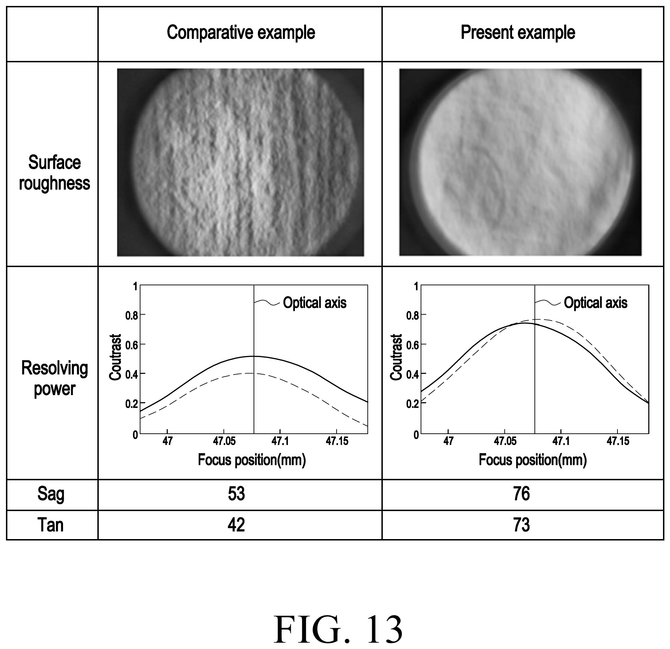

According to an embodiment, the polarization part PP in the form in which the polarizer 401, the reflective polarizer 402, and the quarter-wave plate 403 are laminated may be thinner and have superior optical performance than a conventional polarizing film. According to an embodiment, the lens assembly LA and/or the polarization part PP included in the wearable electronic device 400 may additionally or alternatively include at least one anti-reflection (AR) layer (e.g., the anti-reflection layer 405 of FIG. 6, the anti-reflection layers 405, 405' of FIG. 13). The anti-reflection layer (e.g., the anti-reflection layer 405 of FIG. 6, the anti-reflection layers 405, 407 of FIG. 13) may be a component that transmits light but prevents light from being reflected.

Referring to FIG. 5, the polarization part PP is disposed closer to the user's eye E than the lens assembly LA and may selectively transmit, reflect, and/or block light (e.g., light output from the display D) entering the user's eye. The beam splitter 404 may be configured to transmit a portion of light output from the display D and incident on the beam splitter 404 and reflect another portion of the incident light. According to an embodiment, the beam splitter 404 may be configured as a semi-transparent mirror, and may be configured, e.g., in the form of a mirror coated on one surface of the second lens L2, referring to FIG. 5. Hereinafter, based on the functional aspect of reflecting light, the reflective polarizer 402 may be referred to as a "first reflective member," and the beam splitter 404 may also be referred to as a "second reflective member."

In the following description, a direction from the user's eye E toward the display D may be referred to as a first direction ①, and a direction from the display D toward the user's eye E opposite to the first direction ① may be referred to as a second direction ②. For example, the lens assembly LA may include a plurality of lenses (e.g., the first lens L1, the second lens L2, the third lens L3) sequentially disposed along the first direction ①. As another example, the polarizer 401, the reflective polarizer 402, and/or the quarter-wave plate 403 may be sequentially disposed along the first direction. As yet another example, light may be initially output from the display D along the second direction ②. Here, the first direction ① and the second direction ② may be substantially parallel to a light traveling direction D-E.

According to an embodiment, when the polarization part PP is disposed adjacent to (or in contact with) an nth lens (where "n" is a natural number), the beam splitter 404 may be disposed on an (n+1)th lens adjacent to the nth lens. "Disposed on the (n+1)th lens" may be understood as the beam splitter 404 being disposed adjacent to or in contact with one of the surfaces of the (n+1)th lens. According to an embodiment, the nth lens may be understood as a lens disposed farthest from the display D among the lenses L1, L2, L3 of the lens assembly LA, e.g., the first lens L1. When the nth lens corresponds to the first lens, the beam splitter 404 may be disposed on one surface (e.g., a display-side surface) of the second lens. The beam splitter 404 may be substantially attached to one of the surfaces of the (n+1)th lens. According to an embodiment, a surface of the nth lens on which the polarization part PP is disposed may be substantially a flat surface. A surface of the (n+1)th lens to which the beam splitter 404 is attached may be substantially a flat surface, but may also be a curved surface. As is described below, when the polarization part PP including the first reflective member (e.g., the reflective polarizer 402) is disposed on the display-side surface of the first lens L1, the second reflective member (e.g., the beam splitter 404) may be disposed on the display-side surface of the second lens L2.

According to an embodiment, such an arrangement of the polarization part PP and/or the beam splitter 404 may downsize an optical system implemented with a limited number of lenses (e.g., at least three lenses) and provide an image of good quality. For example, by reducing the number of lenses (or the number of lens surfaces) disposed between the reflective polarizer 402 as the first reflective member and the beam splitter 404 as the second reflective member, refraction, scattering, and/or birefringence due to manufacturing errors on the traveling path of reflected light may be suppressed. It has been mentioned above that stabilizing the optical performance or image quality becomes more difficult as refraction or scattering increases on the path from the display D to the user's eye E.

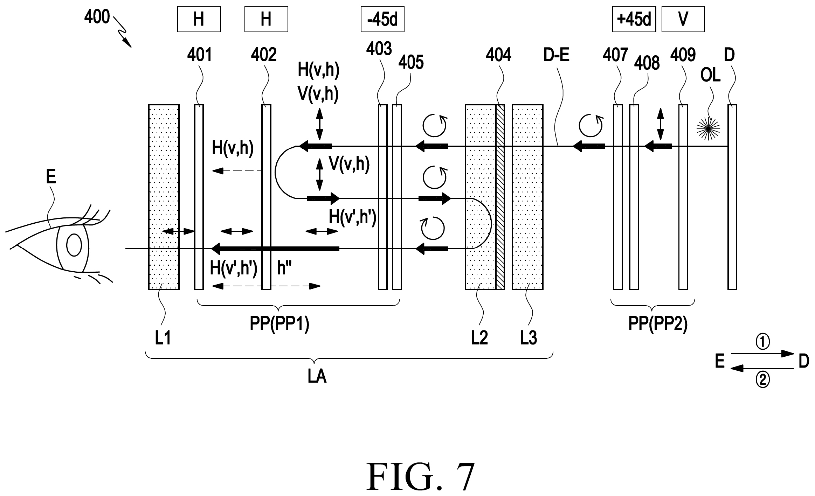

In the embodiment of FIG. 5, the light path from the display D to the user's eye E or the polarization state of light that has passed through (or been reflected by) the polarization part PP or the beam splitter 404 is being described. For convenience of describing the light path or the polarization state, FIG. 5 illustrates that no other polarizing element is provided, but the embodiment(s) of the disclosure is not limited thereto, and another polarizing element (e.g., another polarizer and/or another quarter-wave plate) not illustrated in the drawing may additionally or alternatively be disposed. This is described below in detail through the embodiment of FIG. 7.

FIG. 6 illustrates a path through which light output by a display is focused or guided to a user's eye in a wearable electronic device according to an embodiment of the disclosure.

FIG. 6 may illustrate a view in which an anti-reflection (AR) layer 405 is additionally provided in the embodiment illustrated in FIG. 5.

According to an embodiment, the anti-reflection layer 405 may be disposed between the quarter-wave plate 403 and a lens (e.g., the second lens L2) on which the beam splitter 404 is adjacently disposed. Through the anti-reflection layer 405, leakage of light moving toward the quarter-wave plate 403 may be decreased and/or prevented to increase the light transmission efficiency (or luminance) in delivering light output from the display D to the user's eye E.

FIG. 7 illustrates a path through which light output by a display is focused or guided to a user's eye in a wearable electronic device according to an embodiment of the disclosure.

FIG. 7 may illustrate a view in which, in addition to the polarization part PP including the polarizer 401, the reflective polarizer 402, and the quarter-wave plate 403 in the embodiment illustrated in FIGS. 5 and 6, another polarization part PP is further provided.

According to an embodiment, the wearable electronic device 400 may include another polarization part PP including a quarter-wave plate 408 and a polarizer 409 in addition to the polarization part PP including the polarizer 401, the reflective polarizer 402, and the quarter-wave plate 403. According to an embodiment, the polarization part PP including the polarizer 401, the reflective polarizer 402, and the quarter-wave plate 403 may be referred to as a first polarization part PP1, and the polarization part PP including the quarter-wave plate 408 and the polarizer 409 may be referred to as a second polarization part PP2. And, the polarizer 401 included in the first polarization part PP1 may be referred to as a first polarizer 401, and the polarizer 409 included in the second polarization part PP2 may be referred to as a second polarizer 409. The quarter-wave plate 403 included in the first polarization part PP1 may be referred to as a first quarter-wave plate 403, and the quarter-wave plate 408 included in the second polarization part PP2 may be referred to as a second quarter-wave plate 408.

According to an embodiment, the wearable electronic device 400 may include two polarization parts, i.e., the first polarization part PP1 and the second polarization part PP2, and in this case, optical elements may be disposed in the order of the first polarization part PP1, at least one lens, the beam splitter 404, and the second polarization part PP2, e.g., along the first direction.

According to an embodiment, the second polarization part PP2 may further include an anti-reflection layer 407, and the anti-reflection layer 405 included in the first polarization part PP1 may be referred to as a first anti-reflection layer 405, and the anti-reflection layer 407 included in the second polarization part PP2 may be referred to as a second anti-reflection layer 407.

Referring to FIG. 7, a movement path of light in the wearable electronic device 400 according to an embodiment may be examined as follows. Since the anti-reflection layers 405, 407 are components for preventing reflection in a circumstance of transmitting light, a description of the anti-reflection layers 405, 407 may be omitted in the following description of the movement path of light.

At the top of FIG. 7, information about the optic-axis direction of optical elements is described for convenience of description. Here, the "optic-axis direction" may refer to a direction of an optic axis perpendicular to the ray axis D-E. FIG. 7 may illustrate one example among various embodiments of the optic-axis direction. Describing the optic-axis direction in the embodiment of FIG. 7 in order along the traveling path of light output from the display, the second polarizer 409 is, e.g., an optical element having an optic axis in a vertical direction (V), and the second quarter-wave plate 408 may be, e.g., an optical element having an optic axis in a +45 degree direction relative to the fast axis. The first quarter-wave plate 403 may be, e.g., an optical element having an optic axis in a -45 degree direction relative to the fast axis. And the reflective polarizer 402 and the polarizer 401 may be optical elements having an optic axis in a horizontal direction (H). However, it should be noted that the description of the optic-axis direction is exemplary, and application of a different embodiment is also possible. Hereinafter, behavior in which light is converted is described in detail according to the movement path of light based on the optic-axis direction illustrated in the embodiment of FIG. 7.

Light OL output from the display D may reach the user's eye E after passing through the lens assembly LA and the polarization part PP. The light OL output from the display D may sequentially pass through the second polarizer 409 and the second quarter-wave plate 408 and then reach the beam splitter 404. In this case, the light OL output from the display D may be light that travels while vibrating in various polarization directions (various vector directions). The light output from the display D may be converted to linearly polarized light while passing through the second polarizer 409. And, this linearly polarized light may be converted to circularly polarized light (right-handed circularly polarized light or left-handed circularly polarized light) while passing through the second quarter-wave plate 408.

Light that has reached the beam splitter 404 may pass through the beam splitter 404 and reach the first quarter-wave plate 403. Among light that has reached the first quarter-wave plate 403, circularly polarized light (right-handed circularly polarized light or left-handed circularly polarized light) may be converted to linearly polarized light by the first quarter-wave plate 403 and reach the reflective polarizer 402. Until light that has passed through the beam splitter 404 reaches the reflective polarizer 402, light may move toward the second direction (display D -> user's eye E). Among linearly polarized light that has reached the reflective polarizer 402, linearly polarized light in one direction (e.g., vertical polarization V(v,h) in FIG. 7) is reflected by the reflective polarizer 402 and directed toward the first direction (user's eye E -> display D), and may be converted to circularly polarized light (right-handed circularly polarized light or left-handed circularly polarized light) while passing through the first quarter-wave plate 403 again. In this case, among linearly polarized light that has reached the reflective polarizer 402, linearly polarized light in another direction (e.g., horizontal polarization H(v,h) in FIG. 7) may pass through the reflective polarizer 402 as is. The circularly polarized light (right-handed circularly polarized light or left-handed circularly polarized light) converted by passing through the first quarter-wave plate 403 may be reflected by the beam splitter 404 and directed toward the second direction again. When reflected by the beam splitter 404, the phase of circularly polarized light (right-handed circularly polarized light or left-handed circularly polarized light) may be converted (e.g., if left-handed circularly polarized light -> right-handed circularly polarized light, if right-handed circularly polarized light -> left-handed circularly polarized light). The circularly polarized light with the converted phase may reach the user's eye E by passing through the first quarter-wave plate 403, the reflective polarizer 402, and the polarizer 401 along the second direction. In this case, light passing through the first quarter-wave plate 403 may be converted to linearly polarized light (e.g., horizontal polarization H(v',h') in FIG. 7), pass through the reflective polarizer 402, and then reach the first polarizer 401. In this case, a portion of the linearly polarized light (h'' of H(v',h')) may be reflected by the reflective polarizer 402. Light that has reached the first polarizer 401 may reach the user's eye E with only a portion of the polarization component remaining, as a portion of the polarization component (e.g., a vertical direction component v of H(v,h), a vertical direction component h' of H(v', h')) is removed by the first polarizer 401. However, the embodiment of FIG. 7 exemplarily mentions a change in polarization state of light passing through the wearable electronic device 400 according to an embodiment, and it should be noted that conversion of the polarization component by the first polarizer 401, the reflective polarizer 402, the first quarter-wave plate 403, the beam splitter 404, the second quarter-wave plate 408, and/or the second polarizer 409 may be different from the mentioned embodiment.

The wearable electronic device 400 according to the embodiments of FIGS. 5 to 7 may have an effect of substantially reducing the lens total length while maintaining the focal length required for the lens assembly using the pancake lens structure, i.e., the lens assembly LA including the polarization part PP (the overall length of the path through which light actually travels is maintained). As described above, the wearable electronic device 400 may reduce the lens total length by about 70% using the pancake lens structure, i.e., the lens assembly LA including the polarization part PP.

However, the polarizer 401, 409 and/or the reflective polarizer 402 included in the polarization part PP should transmit only a portion of light and not transmit or reflect another portion of light, and thus may need to have physical properties for distinguishing the traveling direction of light. Typically, the physical properties of the polarizer 401, 409 and/or the reflective polarizer 402 may be defined by an optical axis generated in a process of stretching a base material such as polyvinyl alcohol (PVA) to obtain a polarizing film, for example. However, when the base material such as PVA is stretched, wrinkles may be generated on the surface of the polarizing film according to the direction of stretching. Accordingly, the polarizer 401, 409 and/or the reflective polarizer 402 may be referred to as a wrinkle-causing element. For example, when both the polarizer 401, 409 and the reflective polarizer 402 included in the polarization part PP are formed by stretching a base material such as PVA as described above, films having different optical axes are laminated, and in this case, wrinkles of the polarizing film may be more pronounced.

When light is output from the display D to the wearable electronic device 400 including the polarization part PP having wrinkles as described above, image distortion due to wrinkles may occur when an image or video is input to the user's eye. This may be a cause of degradation of the resolving power of the wearable electronic device 400. For embodiments each including a lens assembly without the polarization part PP and a lens assembly with the polarization part PP, when a modulation transfer function (MTF) graph is measured and peak values are compared, it has been experimentally identified that when the lens assembly without the polarization part PP is about 85%, the lens assembly with the polarization part PP may be lowered to about 50%.

Summarizing the above, when the polarization part PP is provided, an effect of reducing the lens total length may be obtained, but in the case of the lens assembly with the polarization part PP compared to the lens assembly without the polarization part PP, resolving power and sharpness may be degraded.

To reduce and/or eliminate the above-described problem, the disclosure may provide a lens assembly LA and a wearable electronic device 400 including the same, which further include a layer 406 referenced from the embodiments illustrated in FIGS. 8 to 10 below.

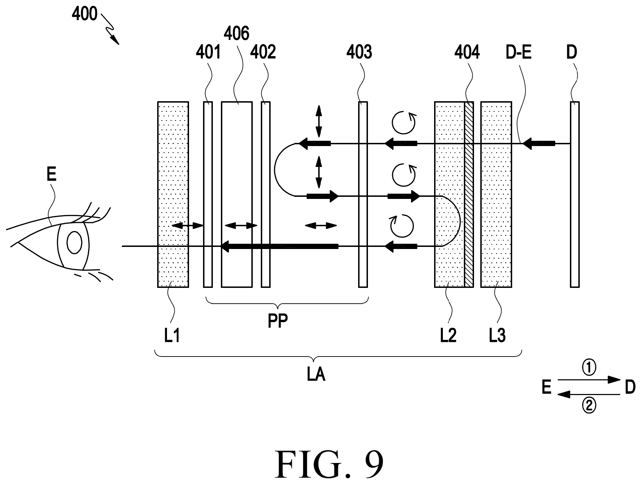

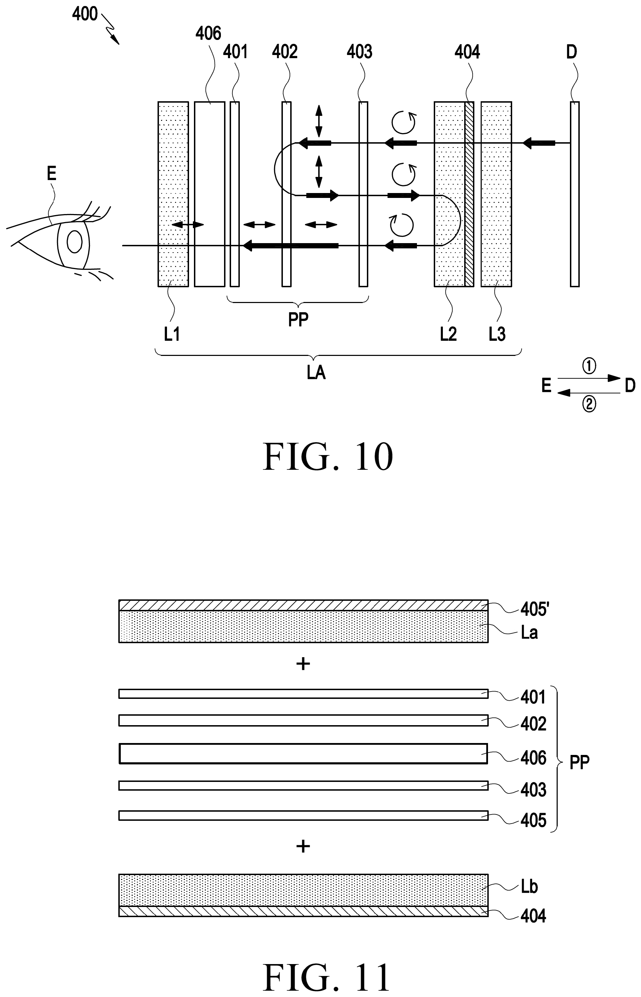

FIG. 8 illustrates a path through which light output by a display is focused or guided to a user's eye in a wearable electronic device according to a first embodiment of the disclosure. FIG. 9 illustrates a path through which light output by a display is focused or guided to a user's eye in a wearable electronic device according to a second embodiment of the disclosure. FIG. 10 illustrates a path through which light output by a display is focused or guided to a user's eye in a wearable electronic device according to a third embodiment of the disclosure.

In the embodiments of FIG. 8 and below, only one polarization part PP (e.g., the first polarization part PP1 of FIG. 7) is illustrated as being included in the lens assembly LA and the wearable electronic device 400 including the same. According to an embodiment, the wearable electronic device 400 according to the embodiments of FIG. 8 and below may also further include another polarization part PP (e.g., the second polarization part PP2 of FIG. 7), but for convenience of description, a description related to the other polarization part PP (e.g., the second polarization part PP2 of FIG. 7) may be omitted below. In other words, in the description below, a description of the second polarizer 409, which is a wrinkle-causing element included in the other polarization part PP (e.g., the second polarization part PP2 of FIG. 7), is omitted, and the description of the first polarizer 401 below may be applied as needed.

The wearable electronic device 400 of the disclosure may additionally include a layer 406 in the pancake lens structure. Referring to FIGS. 8 to 10, the polarization part PP of the wearable electronic device 400 includes a polarizer 401, a reflective polarizer 402, and a quarter-wave plate 403 sequentially disposed from the user's eye E side toward the display D side (the first direction), and may additionally further include a layer 406 that is harder than the polarizer 401 and the reflective polarizer 402. The embodiments of FIGS. 8 to 10 show an embodiment in which the layer 406 is additionally included in the wearable electronic device 400 illustrated in FIG. 5, but the disclosure is not necessarily limited thereto, and application of an embodiment in which the layer 406 is additionally included in the wearable electronic device 400 illustrated in FIG. 6 is also possible. Further, the description related to FIG. 7 may be applied to the embodiments of FIGS. 8 to 10 below.

According to the disclosure, by additionally providing the layer 406 in the polarization part PP, a wearable electronic device 400 that alleviates wrinkles of the polarizing film, prevents image or video distortion, and enhances resolving power of the output image or video may be provided.

In the embodiment of FIG. 8 (hereinafter, referred to as a "first embodiment"), the polarizer 401, the reflective polarizer 402, the layer 406, and the quarter-wave plate 403 may be disposed from the user's eye E side toward the display D side (the first direction). In other words, in the embodiment of FIG. 8, the layer 406 may be disposed between the reflective polarizer 402 and the quarter-wave plate 403.

In the embodiment of FIG. 9 (hereinafter, referred to as a "second embodiment"), the polarizer 401, the layer 406, the reflective polarizer 402, and the quarter-wave plate 403 may be disposed from the user's eye E side toward the display D side (the first direction). In other words, in the embodiment of FIG. 9, the layer 406 may be disposed between the polarizer 401 and the reflective polarizer 402.

In the embodiment of FIG. 10 (hereinafter, referred to as a "third embodiment"), the layer 406, the polarizer 401, the reflective polarizer 402, and the quarter-wave plate 403 may be disposed from the user's eye E side toward the display D side (the first direction). In other words, in the embodiment of FIG. 10, the layer 406 may be disposed at a position closer to the user's eye E side than the polarizer 401.

In the embodiments of FIGS. 8 to 10, the polarization part PP including the layer 406 is illustrated as being disposed between the first lens L1 and the second lens L2, but the disclosure is not necessarily limited thereto. According to an embodiment, the polarization part PP including the layer 406 may be disposed closer to the user's eye E side than the first lens L1, or may also be disposed between the second lens L2 and the third lens L3. When the number of lenses is greater, application of other embodiments, such as the polarization part PP including the layer 406 being disposed between the third lens L3 and a fourth lens, is also possible.

Wrinkles of a wrinkle-causing element (e.g., the polarizer 401 and/or the reflective polarizer 402) included in the polarization part PP may be alleviated, removed, and/or prevented using the layer 406 of the disclosure.

According to an embodiment, the layer 406 may be composed of a material that is harder (has a higher hardness) than the wrinkle-causing element (e.g., the polarizer 401 and/or the reflective polarizer 402). According to this, the layer 406 may be referred to as a "rigid layer 406." As one example, a material having a pencil hardness of 6H or more may be applied as the layer 406. For example, the layer 406 may be formed using polyethylene terephthalate (PET) or polymethyl methacrylate (PMMA) as a base material. The PET may have a pencil hardness of 2 to 3H when hard-coated, and the PMMA may have a pencil hardness of 6H when hard-coated, so PMMA may be more advantageous in terms of hardness.

According to an embodiment, the layer 406 may be composed of a material having a higher modulus (or tensile modulus) than the wrinkle-causing element (e.g., the polarizer 401 and/or the reflective polarizer 402). The PET may have a modulus of 2 to 2.7 GPa, and the PMMA may have a modulus of 2.9 GPa, so PMMA may be more advantageous in terms of modulus.

According to another embodiment, the layer 406 may have a low expansion rate characteristic. For example, the layer 406 may have a thermal expansion coefficient of less than 10 on a basis of 10⁻⁶/°C [µm/m°C]. According to another embodiment, since the layer 406 may be located between a plurality of lenses or located closer to the user's eye side than the lens, the layer 406 may be composed of a transparent material having a visible light transmittance of 90% or more. According to another embodiment, the layer 406 may have a refractive index of 1.5 or more. According to another embodiment, as is described below in detail, the layer 406 may be composed of a bendable material for performing a lamination process according to a roll method (hereinafter, referred to as a "roll lamination process"). According to another embodiment, the layer 406 may have a thickness of 100 µm or less.

According to an embodiment, the layer 406 may be a thin glass (TG) having a very thin shape (e.g., about 100 µm or less). As one example, the layer 406 may also be implemented as a foldable thin glass (FTG) having a very thin shape (e.g., about 100 µm or less). Further, application of other embodiments as a material of the layer 406 is possible. For example, the layer 406 may be a thin synthetic resin (or thin plastic (TP)) having a very thin shape (e.g., about 100 µm or less). For example, the layer 406 may be configured by applying and/or depositing a hard coating liquid on a soft layer having a very thin shape (e.g., about 100 µm or less).

FIG. 11 is a view illustrating a laminated structure between the polarization part and lenses of a wearable electronic device according to an embodiment of the disclosure.

A laminated structure between the polarization part PP and lens(es) may be examined through FIG. 11. A predetermined lens La illustrated in FIG. 11 may be a lens disposed relatively closer to a subject side (e.g., a user's eye side) among the plurality of lenses included in the lens assembly, and another lens Lb may be a lens disposed relatively closer to a display side among the plurality of lenses included in the lens assembly. For example, the predetermined lens La may be a first lens and the other lens Lb may be a second lens, but the disclosure is not necessarily limited thereto.

Although FIG. 11 illustrates the polarization part PP being disposed between a predetermined lens La and another lens Lb adjacent thereto, the disclosure is not necessarily limited thereto. For example, the polarization part PP may be disposed closer to a subject side (e.g., a user's eye side) than the predetermined lens La.

Unlike the embodiments illustrated in FIGS. 8 to 10, FIG. 11 illustrates a laminated structure in which an anti-reflection layer 405' is additionally disposed at a position closer to a subject side (e.g., a user's eye side) than the polarizer 401, and an anti-reflection layer 405 is disposed at a position closer to a display side than the quarter-wave plate 403. According to an embodiment, the anti-reflection layers 405, 405' may be formed in a film form, but alternatively may also be formed in the form of a coating layer coated on a lens. For example, the anti-reflection layer 405' disposed at a position closer to a subject side (e.g., a user's eye side) than the polarizer 401 may be coated on one surface (subject-side surface) of a lens La disposed relatively closer to a subject side (e.g., a user's eye side). As another example, the anti-reflection layer 405 disposed closer to the display side than the quarter-wave plate 403 may be formed in a film form and may also be laminated together with other components of the polarization part PP.

Referring to FIG. 11, the polarization part PP may include the polarizer 401, the reflective polarizer 402, the layer 406, the quarter-wave plate 403, and the anti-reflection layer 405, and these components may all be laminated. And the laminated polarization part PP may be laminated with a lens La and/or Lb.

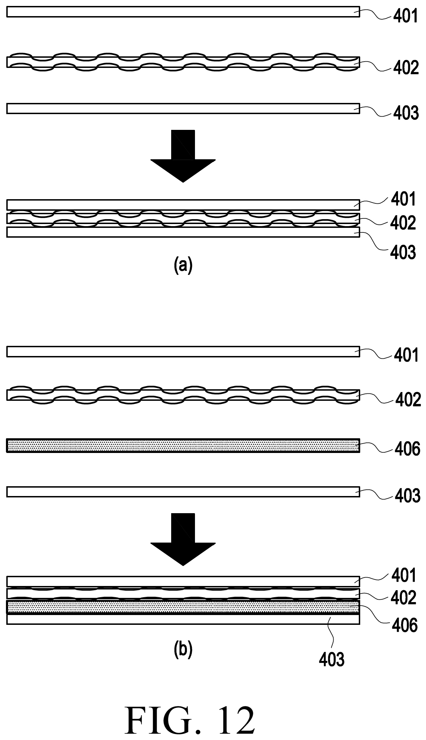

FIG. 12 is a view illustrating lamination of a polarization part according to various embodiments.

Part (a) of FIG. 12 may illustrate lamination of some elements of the polarization part PP in an embodiment that does not include the layer 406. Part (b) of FIG. 12 may illustrate lamination of some elements of the polarization part PP in an embodiment that includes the layer 406. Parts (a) and (b) of FIG. 12 may be conceptual views illustrating enlarged portions of some elements of the polarization part PP of FIG. 10.

Parts (a) and (b) of FIG. 12 each show the polarizer 401, the reflective polarizer 402, and the quarter-wave plate 403, and here, a description is given assuming that wrinkles are formed only on the reflective polarizer 402.

Referring to part (a) of FIG. 12, when the polarizer 401, the reflective polarizer 402, and the quarter-wave plate 403 are laminated without the layer 406, wrinkles of the reflective polarizer 402 may be visually recognized on the exterior of the laminated structure as they are. The wrinkles of the reflective polarizer 402 in the laminated structure may be a factor that distorts an image or video.

Comparing part (a) of FIG. 12, referring to part (b) of FIG. 12, when the layer 406 is laminated together with the polarizer 401, the reflective polarizer 402, and the quarter-wave plate 403, wrinkles of the reflective polarizer 402 may be alleviated, removed, and/or prevented in the laminated structure. Therefore, in the case of part (b) of FIG. 12, since the influence of wrinkles of the reflective polarizer 402 in the laminated structure may be decreased, the probability of distortion of an image or video may also be decreased, and this may act as an advantage of enhancing resolving power.

FIG. 13 is a view illustrating a surface roughness and resolving power of a laminated polarization part according to various embodiments. FIG. 14 is a view illustrating positions where surface roughness is measured in two different directions with respect to a ray axis.

The comparative example of FIG. 13 may illustrate a surface roughness and resolving power of the polarization part laminated as in part (a) of FIG. 12, for example. The present example of FIG. 13 may illustrate a surface roughness and resolving power of the polarization part laminated as in part (b) of FIG. 12, for example.

Referring to the comparative example of FIG. 13, when the laminated polarization part is viewed in an enlarged manner, it may be identified that wrinkles are relatively clearly visible on the surface of the laminated polarization part. Referring to the present example of FIG. 13, when the laminated polarization part is viewed in an enlarged manner, it may be identified that wrinkles are hardly present on the surface of the laminated polarization part.

Referring to FIGS. 13 and 14 together, resolving power may be measured in two different directions (a sag (sagittal) direction and a tan (tangential) direction) with respect to the ray axis, and the measured results may be illustrated as an MTF graph. In the graph illustrated in FIG. 13, the solid line represents the sag direction and the dashed line represents the MTF graph in the tan direction, and it may be identified that a peak of a contrast value in the sag direction and the tan direction appears about at the center of the ray axis. In the case of the comparative example of FIG. 13, the contrast value at the MTF peak in the sag direction and the tan direction is measured as about 53% and 42%, respectively, and in the case of the present example of FIG. 13, the contrast value at the MTF peak in the sag direction and the tan direction is identified to be measured as about 76% and 73%, respectively.

In the case of the comparative example of FIG. 13, the contrast value at the MTF peak in the sag direction and the tan direction has a difference of about 13%, and having such a significant difference in the contrast value at the MTF peak in the sag direction and the tan direction may be referred to as a peak value separation phenomenon. Compared to the comparative example of FIG. 13, in the case of the present example, it may be identified that the difference in contrast value at the MTF peak in the sag direction and the tan direction is about 3%, and the peak value separation phenomenon has also significantly decreased.

Referring to FIGS. 12 to 14 together, it may be identified that the polarization part laminated as in part (b) of FIG. 12, compared to the polarization part laminated as in part (a) of FIG. 12, not only has enhanced flatness of surface roughness, but also has significantly increased resolving power (23% increase in the sag direction, 31% increase in the tan direction).

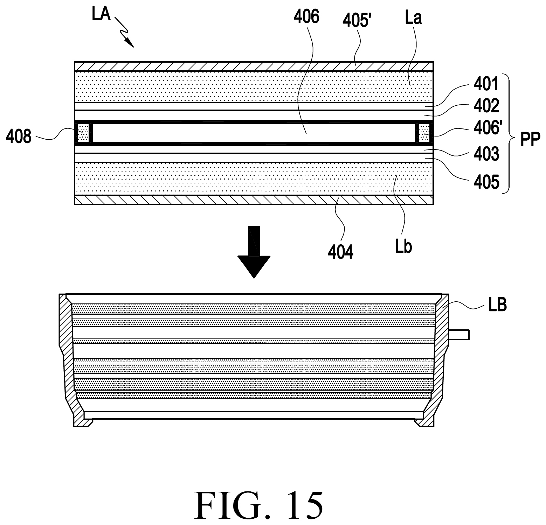

FIG. 15 is a view illustrating assembling of a lens and a laminated polarization part into a lens barrel.

According to an embodiment, in a process of assembling the laminated polarization part PP together with a lens into a lens barrel LB, a protective member 406' may be additionally provided at an edge of the layer 406 to prevent damage to the layer 406.

According to an embodiment, the protective member 406' may be disposed between the layer 406 and the lens barrel LB. According to another embodiment, the protective member 406' may be disposed to surround the periphery of the layer 406 in a circumferential direction.

The protective member 406' may be formed of, e.g., an optically clear adhesive (OCA) or an optically clear resin (OCR).

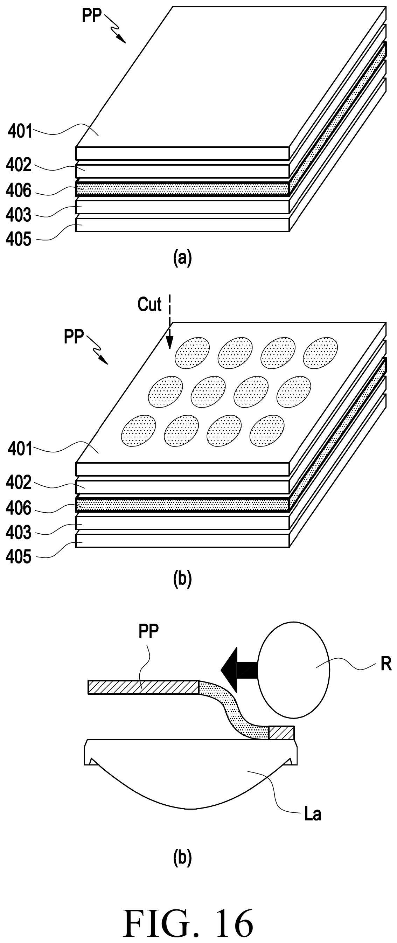

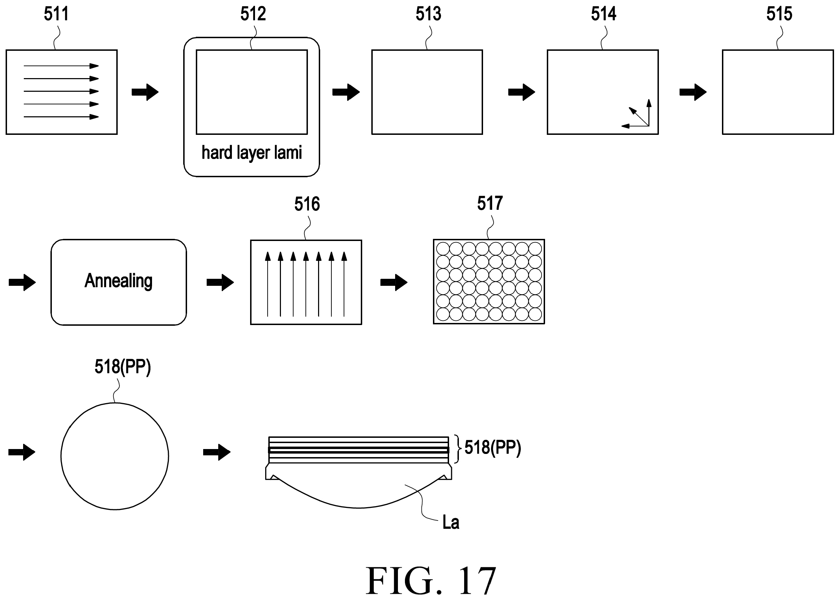

Hereinafter, referring to the embodiments of FIGS. 16 and 17, a process of laminating a polarization part on a lens is described.

FIG. 16 is a view illustrating a process of laminating a polarization part on a lens. FIG. 17 is a block diagram illustrating a process of laminating a polarization part on a lens.

Referring to part (a) of FIG. 16, the polarization part PP may include the polarizer 401, the reflective polarizer 402, the layer 406, the quarter-wave plate 403, and the anti-reflection layer 405, and these components may all be laminated. And, referring to part (b) of FIG. 16, the laminated polarization part PP may be processed (e.g., punched) into a shape corresponding to a lens using a laser cutting device or a CNC machining device. And, referring to part (c) of FIG. 16, the processed (e.g., punched) polarization part PP may be laminated on one surface of a lens (e.g., La) using a roller R. Through a lamination process using the roller R (hereinafter, referred to as a "roll lamination process"), a phenomenon of generation and/or residual of bubbles between the lens and the film may be decreased and/or prevented.

The process of laminating a polarization part on a lens is described in more detail with reference to FIG. 17.

Referring to operation 511 (hereinafter, simply referred to as "operation 511"), a lamination process according to an embodiment may first prepare a wrinkle-causing element. In the disclosure, the wrinkle-causing element may be, e.g., the polarizer 401 and/or the reflective polarizer 402, and may be referred to below as a "polarizing film" for convenience. The wrinkle-causing element prepared in operation 511 may be one of the polarizer 401 and/or the reflective polarizer 402. An optical axis may be formed on the wrinkle-causing element prepared in operation 511 due to stretching. For example, the optical axis formed on the wrinkle-causing element prepared in operation 511 may be parallel to the horizontal direction. According to an embodiment, an adhesive (e.g., OCA or OCR) for lamination may be attached to at least one surface of the wrinkle-causing element prepared in operation 511.

As one example of operation 511, when the wrinkle-causing element prepared is the reflective polarizer 402, in operation 511, the reflective polarizer 402 may be coated with an adhesive (e.g., OCA or OCR) in a state of having an optical axis in one direction (e.g., horizontal direction). Regarding operation 512, the layer 406 having a high hardness and/or a high modulus may be laminated on the polarizing film stretched in the optical-axis direction in operation 511. For example, when the wrinkle-causing element prepared in operation 511 is the reflective polarizer 402, in operation 512, the layer 406 may be laminated on the reflective polarizer 402.

Regarding operation 513, other components for configuring the polarization part PP may be attached. For example, when the wrinkle-causing element prepared in operation 511 is the reflective polarizer 402, in operation 513, the quarter-wave plate 403 may be laminated on the reflective polarizer 402.

Regarding operation 514, when the component laminated on the reflective polarizer 402 in operation 513 is the quarter-wave plate 403, e.g., a protective film may be attached to one surface of the quarter-wave plate 403, and this may be removed.

Regarding operation 515, in addition to the preceding operations 511, 512, 513, 514, an operation of forming the anti-reflection layers 405, 405' may be performed. However, operation 515 may be performed at any stage before, while, or after the preceding operations 511, 512, 513, 514.

And an annealing process may be performed in a state in which the polarization part PP is laminated. The annealing process is a heat treatment method of heating an object to a predetermined temperature and then slowly cooling it, and in the disclosure, the annealing process may be performed to increase adhesion between the components of the laminated polarization part PP. For example, a method of heating the laminated polarization part PP under conditions of 80°C or higher for 2 hours or more and then slowly cooling it may be performed.

Regarding operation 516, a process of additionally laminating the polarizer 401 may be performed. Here, the polarizer 401 may also be a wrinkle-causing element stretched in one direction (e.g., vertical direction). Although not illustrated in the drawings, an annealing process may be additionally performed after the lamination process of operation 516.

Regarding operations 517 and 518, the laminated polarization part PP may be processed using a laser cutting device or a CNC machining device, and the polarization part PP may be processed to correspond to the shape of the lens. The polarization part PP processed to correspond to the shape of the lens may be laminated on a lens (e.g., La) using the roller R described in part (c) of FIG. 16.

According to an embodiment, an autoclave process may be additionally performed between the processes included in FIGS. 16 and 17.

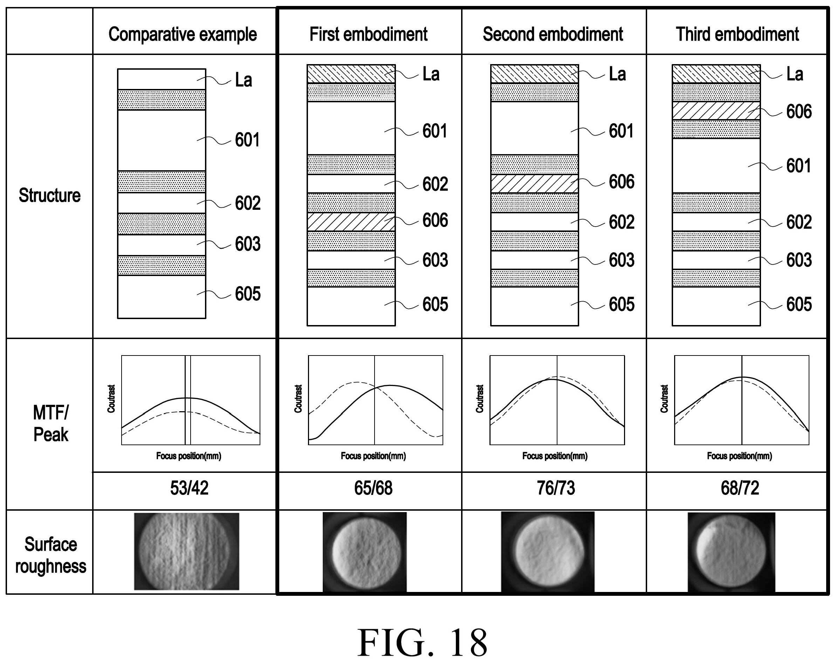

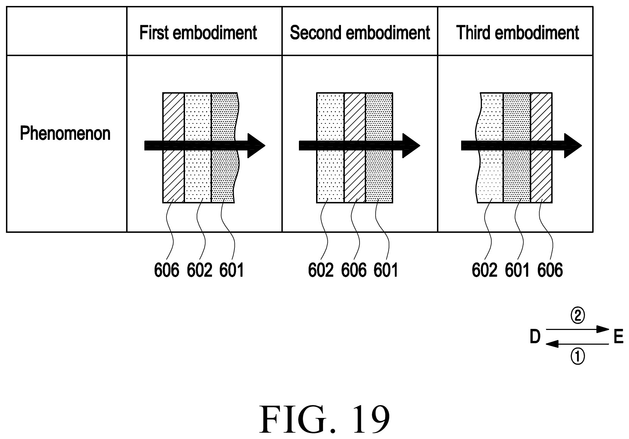

Hereinafter, referring to FIGS. 18 and 19, performance according to the position of the layer 406 in the polarization part PP may be compared by referring to peak values of MTF graphs and surface roughness according to various embodiments.

FIG. 18 is a view illustrating a laminated structure of a lens and a polarization part, MTF peak graphs, and a surface roughness according to various embodiments. FIG. 19 is a view conceptually comparing a first embodiment, a second embodiment, and a third embodiment of the disclosure.

FIG. 18 illustrates peak values of MTF graphs and surface roughness for a comparative example corresponding to the comparative example of FIG. 13 and a first embodiment, a second embodiment, and a third embodiment corresponding to the present example of FIG. 13.

The wearable electronic device illustrated in FIGS. 18 and 19 may include a lens La, a polarizer 601, a reflective polarizer 602, a quarter-wave plate 603, and an anti-reflection layer 605. In describing the embodiments illustrated in FIGS. 18 and 19, descriptions overlapping the above-described embodiments may be omitted. For example, other lens(es) and the beam splitter among the above-described embodiments are omitted from the illustration. However, the disclosure is not limited thereto, and for example, as illustrated in FIG. 18, the wearable electronic device may additionally include an anti-reflection layer 605.

Referring to FIGS. 18 and 19 together, the first embodiment may illustrate a state in which the layer 606 is attached to a surface of the reflective polarizer 602 facing the display D side. The second embodiment may illustrate a state in which the layer 606 is attached to a surface of the reflective polarizer 602 facing the user's eye E side and between the reflective polarizer 602 and the polarizer 601. The third embodiment may illustrate a state in which the layer 606 is attached to a surface of the polarizer 601 facing the user's eye E side.

Referring to FIG. 18, the surface roughness of the comparative example illustrates that when the laminated polarization part is viewed in an enlarged manner, wrinkles are relatively clearly visible on the surface of the laminated polarization part. On the other hand, the surface roughness of the first embodiment, the second embodiment, and the third embodiment of FIG. 18 illustrates that when the laminated polarization part is viewed in an enlarged manner, wrinkles are hardly present on the surface of the laminated polarization part.

Similar to FIG. 13, FIG. 18 also illustrates MTF graphs measured for resolving power in two different directions (a sag (sagittal) direction and a tan (tangential) direction) with respect to the ray axis. In the graph illustrated in FIG. 18, the solid line represents the sag direction and the dashed line represents the MTF graph in the tan direction, and it may be identified that a peak of a contrast value in the sag direction and the tan direction appears about at the center of the optical axis. In the case of the comparative example of FIG. 18, the contrast value at the MTF peak in the sag direction and the tan direction is identified to be measured as about 53% and 42%, respectively. In the case of the first embodiment of FIG. 18, the contrast value at the MTF peak in the sag direction and the tan direction is identified to be measured as about 65% and 68%, respectively. In the case of the second embodiment of FIG. 18, the contrast value at the MTF peak in the sag direction and the tan direction is identified to be measured as about 76% and 73%, respectively. In the case of the third embodiment of FIG. 18, the contrast value at the MTF peak in the sag direction and the tan direction is identified to be measured as about 68% and 72%, respectively.

Comparing the first embodiment, the second embodiment, and the third embodiment, which correspond to the present example, referring to FIGS. 18 and 19, it may be identified that in the case of the first embodiment, the deviation of the contrast value at the MTF peak in the sag direction and the tan direction increases as the distance from the center of the optical axis increases, but in the case of the second embodiment and the third embodiment, the deviation of the contrast value at the MTF peak in the sag direction and the tan direction is almost constant. Examining these results, it may be identified that the second embodiment and the third embodiment have a more advantageous effect than the first embodiment from the viewpoint of resolving power.

Referring to FIG. 19, in the case of the first embodiment, since the layer 606 and the polarizer 601 are spaced apart, the effect of alleviating, removing, and/or preventing wrinkles of the polarizer 601 through lamination between the polarizer 601 and the reflective polarizer 602 may be less than that of the second embodiment. Similarly, in the case of the third embodiment, since the layer 606 and the reflective polarizer 602 are spaced apart, the effect of alleviating, removing, and/or preventing wrinkles of the polarizer 601 through lamination between the polarizer 601 and the reflective polarizer 602 may be less than that of the second embodiment. In terms of the wrinkle enhancement effect, the second embodiment may exhibit the most significant effect among the first embodiment, the second embodiment, and the third embodiment.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. In this document, phrases such as "A or B", "at least one of A and B", "at least one of A or B", "A, B or C", "at least one of A, B and C", and "at least one of A, B, or C" may each include any one of the items listed together in the corresponding phrase, or all possible combinations thereof. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment of the disclosure, in a lens assembly (LA), a lens assembly may be provided that includes: at least three lenses; and a polarization part (PP) including a polarizer 401, 601, a reflective polarizer 402, 602, a quarter-wave plate 403, 603, and a beam splitter 404 sequentially disposed along a first direction, wherein the polarizer 401, 601, the reflective polarizer 402, 602, and the quarter-wave plate 403, 603 are spaced apart from the beam splitter 404 with at least one lens among the at least three lenses interposed therebetween, and wherein the polarization part PP includes a layer 406, 606 that is harder than the polarizer 401, 601 and the reflective polarizer 402, 602.

According to an embodiment, the lens assembly may be a pancake-type lens assembly.

According to an embodiment, the polarizer 401, 601 and the reflective polarizer 402, 602 may be respectively stretched to have optical axes in different directions.

According to an embodiment, the polarization part PP may include a first polarization part PP1 including a first polarizer 401, 601, a first reflective polarizer 402, 602, and a first quarter-wave plate 403, 603 and a second polarization part PP2 including a second quarter-wave plate 408 and a second polarizer 409.

According to an embodiment, the polarization part PP may be disposed between two lenses adjacent to each other among the at least three lenses.

According to an embodiment, the layer 406, 606 may be disposed closer to a user's eye side than the polarizer.

According to an embodiment, the layer 406, 606 may be disposed between the polarizer 401, 601 and the reflective polarizer 402, 602.

According to an embodiment, the layer may be disposed between the reflective polarizer and the quarter-wave plate.

According to an embodiment, the layer may be a layer having a higher modulus than the polarizer and the reflective polarizer.

According to an embodiment, the layer may be formed of a transparent material having a visible light transmittance of 90% or more.

According to an embodiment, at least a portion of the layer may be bendable.

According to an embodiment, the layer may have a refractive index of 1.5 or more.

According to an embodiment, a manufacturing process of the polarization part may include a process of annealing a laminated polarization part.

According to an embodiment, the layer may have a thickness of 100 µm or less. The layer may be formed by applying and/or depositing a hard coating liquid on a thin glass (TG), a foldable thin glass (FTG), a thin synthetic resin (or thin plastic (TP)), polyethylene terephthalate (PET), or polymethyl methacrylate (PMMA) and/or a soft layer.

According to an embodiment, a wearable electronic device including the lens assembly LA and a display D configured to emit light toward a user's eye side (E) may be provided.

According to an embodiment of the disclosure, in a lens assembly (LA), a lens assembly may be provided that includes: at least three lenses; and a polarization part (PP) including a polarizer 401, 601, a reflective polarizer 402, 602, a quarter-wave plate 403, 603, and a beam splitter 404 sequentially disposed along a first direction, wherein the polarizer 401, 601, the reflective polarizer 402, 602, and the quarter-wave plate 403, 603 are spaced apart from the beam splitter 404 with at least one lens among the at least three lenses interposed therebetween, and wherein the polarization part PP includes a layer 406, 606 having a higher modulus than the polarizer 401, 601 and the reflective polarizer 402, 602.

According to an embodiment, a manufacturing process of the polarization part may include a process of annealing a laminated polarization part.

According to an embodiment, the layer may have a thickness of 100 µm or less. The layer may be formed by applying and/or depositing a hard coating liquid on a thin glass (TG), a foldable thin glass (FTG), a thin synthetic resin (or thin plastic (TP)), polyethylene terephthalate (PET), or polymethyl methacrylate (PMMA) and/or a soft layer.

According to an embodiment of the disclosure, in a wearable electronic device 400, a wearable electronic device may be provided that includes: at least three lenses disposed between a user's eye (E) side and a display (D) side and aligned along a ray axis (O); and a polarization part (PP) including a polarizer 401, 601, a reflective polarizer 402, 602, a quarter-wave plate 403, 603, and a beam splitter 404 sequentially disposed along a first direction, wherein the polarizer 401, 601, the reflective polarizer 402, 602, and the quarter-wave plate 403, 603 are spaced apart from the beam splitter 404 with at least one lens among the at least three lenses interposed therebetween, and a rigid layer 406, 606 disposed between the polarizer and the reflective polarizer.

According to an embodiment, the lens assembly may be a pancake-type lens assembly.

While the disclosure has been described and shown in connection with various embodiments, it should be appreciated that various embodiments are intended not as limiting but as illustrative. It is apparent to those skilled in the art that various changes may be made in the form and details without departing from the overall scope of the disclosure, including the appended claims and equivalents thereof.

## Claims

1. A lens assembly (LA), comprising:
at least three lenses; and
a polarization part (PP) including a polarizer (401, 601), a reflective polarizer (402, 602), a quarter-wave plate (403, 603), and a beam splitter (404) sequentially disposed along a first direction,
wherein the polarizer (401, 601), the reflective polarizer (402, 602), and the quarter-wave plate (403, 603) are spaced apart from the beam splitter (404) with at least one lens among the at least three lenses interposed therebetween, and
wherein the polarization part (PP) includes a layer (406, 606) that is harder than the polarizer (401, 601) and the reflective polarizer (402, 602).

2. The lens assembly of claim 1, wherein the lens assembly is a pancake-type lens assembly.

3. The lens assembly of claim 1 or 2,
wherein the polarizer (401, 601) and the reflective polarizer (402, 602) are respectively stretched to have optical axes in different directions.

4. The lens assembly of any one of claims 1 to 3,
wherein the polarization part (PP) includes:
a first polarization part (PP1) including a first polarizer (401, 601), a first reflective polarizer (402, 602) and a first quarter-wave plate (403, 603); and
a second polarization part (PP2) including a second quarter-wave plate (408) and a second polarizer (409).

5. The lens assembly of any one of claims 1 to 4,
wherein the polarization part (PP) is disposed between two lenses adjacent to each other among the at least three lenses.

6. The lens assembly of any one of claims 1 to 5,
wherein the layer (406, 606) is disposed closer to a user's eye side than the polarizer (401, 601).

7. The lens assembly of any one of claims 1 to 6,
wherein the layer (406, 606) is disposed between the polarizer (401, 601) and the reflective polarizer (402, 602).

8. The lens assembly of any one of claims 1 to 7,
wherein the layer (406, 606) is disposed between the reflective polarizer (402, 602) and the quarter-wave plate (403, 603).

9. The lens assembly of any one of claims 1 to 8,
wherein the layer (406, 606) has a higher modulus than the polarizer (401, 601) and the reflective polarizer (402, 602).

10. The lens assembly of any one of claims 1 to 9,
wherein the layer (406, 606) is formed of a transparent material having a visible light transmittance of 90% or more.

11. The lens assembly of any one of claims 1 to 10,
wherein at least a portion of the layer (406, 606) is bendable.

12. The lens assembly of any one of claims 1 to 11,
wherein the layer (406, 606) has a refractive index of 1.5 or more.

13. The lens assembly of any one of claims 1 to 12,
wherein a manufacturing process of the polarization part (PP) includes a process of annealing a laminated polarization part (PP).

14. The lens assembly of any one of claims 1 to 13,
wherein the layer has a thickness of 100µm or less, and
wherein the layer is formed of thin glass (TG), foldable thin glass (FTG), thin synthetic resin (thin plastic (TP)), polyethylene terephthalate (PET), or polymethyl methacrylate (PMMA), and/or the layer is formed by applying and/or depositing a hard coating liquid on a soft layer.

15. A wearable electronic device including the lens assembly (LA) according to any one of claims 1 to 14 and a display (D) configured to emit light toward a user's eye side (E).
